# EUROPEAN PATENT SPECIFICATION

(11) **EP 1 538 691 B1**
(45) Date of publication and mention of the grant of the patent: **18.05.2011**
(21) Application number: 04747111.5
(22) Date of filing: 07.07.2004
(51) Int. Cl.: H01P 1/12

(54) **VARIABLE CAPACITANCE ELEMENT**
ELEMENT MIT VARIABLER KAPAZITÄT
ELEMENT A CAPACITE VARIABLE

(30) Priority: 08.09.2003 JP 2003315423
(43) Date of publication of application: 08.06.2005
(73) Proprietor: MURATA MANUFACTURING CO., LTD., Nagaokakyo-shi, Kyoto 617-8555 (JP)
(72) Inventor: YOSHIDA, Koichi, Murata Manufacturing Co., Ltd., Nagaokakyo-shi, Kyoto 617-8555 (JP); OGUCHI, Takahiro, Murata Manufacturing Co., Ltd., Nagaokakyo-shi, Kyoto 617-8555 (JP); KONAKA, Yoshihiro, Murata Manufacturing Co., Ltd., Nagaokakyo-shi, Kyoto 617-8555 (JP)
(74) Representative: Schoppe, Fritz
(86) International application number: PCT/JP2004/009642
(87) International publication number: WO 2005/027257

(56) References cited:
- JP-A- 8 021 967
- JP-A- 8 509 093
- JP-A- 11 274 805
- JP-A- 2000 100 659
- US-A- 6 020 564

## Description

### Technical Field

The present invention relates to a variable capacitance element that performs a switching operation on a high frequency signal or the like by changing capacitance, or that is suitable for use as a variable capacitor.

### Background Art

In general, variable capacitance elements are used as, for example, variable capacitance switches, variable capacitors, etc. Almost similarly to, for example, the electrostatically driven switch described in Patent Document 1, in these variable capacitance elements, a movable part is provided above a substrate so as to be displaced and the movable part is moved close to or away from the substrate by an electrostatic force.

Patent Document 1: Japanese Unexamined Patent Application Publication No. 2000-188050

Referring to an example of a variable capacitance switch as the above type of variable capacitance element of the related art, in the variable capacitance switch, a transmission line, such as a coplanar line, is provided above a substrate. A plate-like movable part is provided above the substrate by support beams so as to be displaced. The movable part opposes an intermediate region of the transmission line, with a gap provided therebetween.

A region of the movable part which faces the transmission line is provided with a movable electrode formed by a metal film or the like. The movable electrode and the movable part are displaced perpendicularly to the substrate, whereby both are moved close to or away from the transmission line.

The movable part is provided with a driving electrode which is externally supplied with power. For example, also the substrate is provided with a counter driving electrode which opposes the driving electrode, with a gap provided therebetween. When power is supplied between the driving electrodes, an electrostatic force is generated between them, whereby the movable part is displaced in a predetermined direction (e.g., a direction close to the transmission line) against the spring forces of the support beams. This displaces the movable electrode together with the movable part, and the gap (or capacitance) between the movable electrode and the transmission line changes.

When power supply to the driving electrodes is stopped, the movable part and the movable electrode are returned to their initial positions by the spring forces of the support beams. This returns the capacitance between the movable electrode and the transmission line to an initial state.

As described above, in a variable capacitance switch, by increasing and decreasing the capacitance between a movable electrode and a transmission line in accordance with the position of a movable part, and changing the resonant frequency of the transmission line in this region, for example, a high frequency signal transmitted through the transmission line is allowed to pass or is cut off (or reflected) at a variable capacitance switch position.

In the above-described related art, for example, a plate-like movable part is moved close and away from a transmission line. However, when the movable part is displaced, for example, due to the shapes of support beams, a variation in spring force, etc., the movable part (and movable electrode) may be moved close to the transmission line, not in parallel thereto, but with it inclined.

Accordingly, when the movable electrode is moved close to the transmission line, the size of a gap (or capacitance) formed between both in accordance with the inclination state varies. This causes a possibility that the resonant frequency of the transmission line and the transmission characteristics of a high frequency signal are unstable, so that a problem occurs in that the performance and reliability required for a switch deteriorate.

In a variable capacitance switch of the related art, a film movable electrode is provided so as to cover a plate-like movable part. Accordingly, when an ambient temperature around the switch changes, the movable part and the movable electrode easily warp due to a difference in thermal expansion between both, or the like. Moreover, regarding the warping, there are, for example, cases in which the movable part warps in a convex form toward the transmission line, and in which the movable part warps in a concave form away from the transmission line. The warping direction may be changed in accordance with an increase or decrease in temperature.

Document US6020564 discloses a microelectromechanical switch, with a permanently in one direction warped movable part. In contrast to the following invention, this pre-warping has a different purpose. It reduces the initial force for further bending of the movable part during switching operation.

Accordingly, in the related art, depending on also the warping state (warping direction and degree) of the movable part, the capacitance between the movable electrode and the transmission line easily varies. Thus, this causes also a problem in that the operation of the variable capacitance switch becomes unstable for a change in temperature, or the like.

### Disclosure of Invention

The present invention has been made in view of the above-described problems in the related art. An object of the present invention is to provide a variable capacitance element in which, when a movable part is displaced, capacitance can be stably changed between a movable electrode and a fixed electrode, which can maintain good operation characteristics for a change in temperature, or the like, and in which reliability can be improved.

To solve the above problems, the present invention is applied to a variable capacitance element comprising a substrate, a fixed electrode provided on the substrate, a plate-like movable part provided, at a position opposing the fixed electrode, on the substrate so as to be displaced, the movable part being moved close to and away from the fixed electrode, a movable electrode provided in a region of the movable part which faces the fixed electrode, the movable electrode having a capacitance in conjunction with the fixed electrode which is changed when the movable electrode is moved close to or away from the fixed electrode, and driving means for driving the movable part in a direction in which the movable part is moved close to or away from the fixed electrode, wherein the movable part is provided with a warp adjusting film by which a direction in which a central portion of the movable part warps with respect to peripheral portions thereof is constantly maintained to one of a direction of warping in a convex form toward the fixed electrode and a direction of warping in a concave form away from the fixed electrode.

A construction employed by the present invention is characterized in that the movable part is provided with a warp adjusting film by which a direction in which a central portion of the movable part warps with respect to peripheral portions thereof is constantly maintained to one of a direction of warping in a convex form toward the fixed electrode and a direction of warping in a concave form away from the fixed electrode.

According to the present invention, since a movable part is provided with a warp adjusting film, a driving means is used to move the movable part close to and away from a fixed electrode. At this time, the capacitance between the movable electrode and the fixed electrode can be changed. In this case, for example, for a change in temperature, or the like, the warp adjusting film allows the movable part to constantly warp in a predetermined direction. When the movable part is displaced close to the fixed electrode, the warp adjusting film can stably maintain the movable electrode at a predetermined position close to the fixed electrode.

Accordingly, for example, even if the movable part is moved close to the fixed electrode, with it inclined to some extent, in its central region, the movable electrode and the fixed electrode can be moved close to each other, having an accurate positional relationship. For example, even if the temperature of the element greatly changes, the warp adjusting film can prevent the movable part and the movable electrode from having a change in warp due to a difference in thermal expansion, and can prevent the positional relationship between the movable electrode and the fixed electrode from being shifted due to the above change.

Therefore, a capacitance obtained when the movable electrode and the fixed electrode are moved close to each other can be set to an accurate value. The capacitance between both can be switched with high accuracy in accordance with the position of the movable part. This makes it possible to perform stable switching operations of various types which use, for example, a change in capacitance, and good operation characteristics can be maintained for a change in temperature. In addition, the performance and reliability of the element can be improved.

According to the present invention, when the sum of an internal stress generated in the formation of the warp adjusting film on the movable part and a thermal stress generated by a difference in thermal expansion between the movable part and the warp adjusting film is a total stress, the movable part and the warp adjusting film may be formed so that, for a change in temperature, the total stress constantly maintains the warping direction of the movable part to be unidirectional.

In this case, the movable part and the warp adjusting film are formed so that a total stress of an internal stress and a thermal stress constantly maintains the warping direction of the movable part to be unidirectional. Thus, even if the temperature of the element changes in a broad temperature range, it is ensured that, after the total stress, which is applied to the movable part, the warp adjusting film, etc., greatly changes due to an increase or decrease in temperature, the warping direction is prevented from being varied based on this stress. Accordingly, the movable part can be constantly warped in a predetermined direction in a stable state.

According to the present invention, preferably, the warp adjusting film is formed to warp the movable part in the direction of warping in the convex form toward the fixed electrode.

According to the present invention, the warp adjusting film is formed so that the movable part warps in a convex form toward the fixed electrode. Thus, a central portion of the movable part can project close to the fixed electrode compared with peripheral portions. This enables the central portion of the movable part and the fixed electrode to move closer to each other, even if the movable part is displaced toward the fixed electrode, with it inclined. Thus, the distance between both can be sufficiently reduced.

Therefore, when the movable part is moved close to or away from the fixed electrode, the capacitance between both can be greatly changed. This makes it possible to perform stable switching operations of various types in accordance with a change in capacitance.

In addition, according to the present invention, the warp adjusting film may be an insulating film for covering, with a compressive stress, the region of the movable part which faces the fixed electrode, the movable electrode may be provided on the movable part, with the insulating film provided therebetween, and the insulating film may use the compressive stress to warp the movable part and the movable electrode in the direction of warping in the convex form toward the fixed electrode.

According to the present invention, the movable electrode is provided on the movable part, with the insulating film provided therebetween, which serves as a warp adjusting film, and the insulating film uses a compressive stress to warp the movable part and the movable electrode in the direction of warping in a convex form toward the fixed electrode. Thus, when the movable part reaches the vicinity of the fixed electrode, the distance between the central portion of the movable electrode and the fixed electrode can be sufficiently reduced. This makes it possible to perform stable switching operations of various types by greatly changing the capacitance between the movable electrode and the fixed electrode.

Since the insulating film establishes insulation between the movable part and the movable electrode, for example, even if the movable part is supplied with power, the need to provide another insulating structure between the movable part and the movable electrode is eliminated. Their construction can be simplified.

According to the present invention, the warp adjusting film may be formed so as to warp the movable part in the direction of warping in the concave form away from the fixed electrode.

In this case, the warp adjusting film is formed so as to warp the movable part in the direction of warping in the concave form away from the fixed electrode. Thus, the movable electrode and the fixed electrode can be made close to each other, having an accurate positional relationship, for example, even if there is inclination of the movable part or a change in ambient temperature. Accordingly, the capacitance between them can be switched with high accuracy in accordance with the position of the movable part.

In addition, according to the present invention, between the fixed electrode and the movable electrode, preferably, at least one member is provided with an insulating stopper which abuts on the other member when the movable part is displaced toward the fixed electrode.

According to the present invention, between the fixed electrode and the movable electrode, at least one member is provided with an insulating stopper which abuts on the other member when the movable part is displaced toward the fixed electrode. Thus, for example, in a case in which the fixed electrode is provided with a stopper, when the movable part is displaced toward the fixed electrode, the movable electrode can abut on the stopper.

This enables the stopper to stably maintain the movable part at a predetermined position close to the fixed electrode, so that the positional relationship (capacitance) between them can be accurately set. The movable electrode can be prevented from being accidentally displaced due to a shock or the like, thus enhancing resistance of the element to vibration. It is ensured that the stopper establishes insulation between the movable electrode and the fixed electrode, so that their short-circuiting can be prevented.

In addition, for example, in a case in which the movable electrode is provided with a stopper, when the movable part is displaced toward the fixed electrode, the stopper is allowed to abut on the fixed electrode. Also in this case, similarly, the positional relationship between the movable electrode and the fixed electrode can be accurately set by the stopper, and short-circuiting between both can be prevented.

According to the present invention, the stopper may be provided in a portion of a region where the fixed electrode and the movable electrode oppose each other.

According to the present invention, the stopper is provided in a portion of a region where the fixed electrode and the movable part oppose each other. Thus, when the movable part reaches a position close to the fixed electrode, an area in which the movable electrode and the stopper abut on each other (or an area in which the fixed electrode and the stopper abut on each other) can be reduced. This can prevent the variable capacitance element from malfunctioning due to fixed bonding of the movable electrode and the stopper, or the fixed electrode and the stopper, so that the element operation can be stabilized.

At a position other than the stopper, a gap can be formed between the movable electrode and the fixed electrode. Thus, even if the movable electrode or the fixed electrode has, at the gap position, a projection due to a processing error, the projection can be prevented from affecting the positional relationship between the movable electrode and the fixed electrode. Accordingly, the stopper can absorb a processing error or the like in movable electrode or fixed electrode, so that the positional relationship of these can be stably set.

According to the present invention, the fixed electrode may be formed by a transmission line for transmitting a high frequency signal.

According to the present invention, the fixed electrode is a transmission line for transmitting a high frequency signal. Thus, when the movable part and the movable electrode are made close to or away from the transmission line, a high frequency signal transmitted through the transmission line can be cut off or is allowed to pass, whereby a switching operation can be performed for the high frequency signal.

Since, in this case, for example, even if there is inclination of the movable part, a change in ambient temperature, or the like, the warp adjusting film can constantly maintain the warping of the movable part to be unidirectional, a capacitance, obtained when the movable electrode and the fixed electrode are close to each other, can be set to an accurate value. In this vicinity region, the resonant frequency of the transmission line can be switched to a desired value. This makes it possible to perform a stable switching operation of permitting passage and cutoff of the high frequency signal.

Moreover, according to the present invention, for the substrate, a different substrate is provided opposite the substrate, with the movable part provided therebetween, and the different substrate is provided with a driving electrode which forms the driving means and which uses an electrostatic force to displace the movable part.

According to the present invention, a different substrate is provided opposite the substrate, with the movable part provided therebetween, and a driving means is formed by a driving electrode provided on the different substrate. Thus, by generating an electrostatic force between the driving electrode and the movable part, the movable part can be stably moved close to and away from the fixed electrode.

### Brief Description of the Drawings

[Fig. 1] Fig. 1 is a plan view showing a variable capacitance switch according to a first embodiment of the present invention, with a part of the switch broken away.
[Fig. 2] Fig. 2 is a sectional view of the variable capacitance switch when it is viewed in a direction from the line II-II shown in Fig. 1.
[Fig. 3] Fig. 3 is an enlarged sectional view showing main portions in Fig. 2, such as a movable part, an insulating film, and a movable electrode.
[Fig. 4] Fig. 4 is an illustration of a state in which a movable part, an insulating film, a movable electrode, etc., warp.
[Fig. 5] Fig. 5 is a sectional view showing a state in which a movable part, etc., are switched to be at a signal passage position.
[Fig. 6] Fig. 6 is a sectional view showing a state in which driving electrodes, stoppers, etc., are formed on a cover part at the time of producing a variable capacitance switch.
[Fig. 7] Fig. 7 is a sectional view showing a state in which the cover part and a silicon plate are joined to each other.
[Fig. 8] Fig. 8 is a sectional view showing a state in which the silicon plate jointed to the cover part is polished.
[Fig. 9] Fig. 9 is a sectional view showing a state in which an insulating film is formed on the polished silicon plate.
[Fig. 10] Fig. 10 is a sectional view showing a state in which a movable electrode is formed on the insulating film.
[Fig. 11] Fig. 11 is a sectional view showing a state in which a movable part, etc., are formed by etching the silicon plate.
[Fig. 12] Fig. 12 is a sectional view showing a state in which a substrate is bonded to supporting portions in the movable part.
[Fig. 13] Fig. 13 is a sectional view showing a variable capacitance switch according to a second embodiment of the present invention.
[Fig. 14] Fig. 14 is a sectional view showing a variable capacitance switch according to a third embodiment of the present invention.
[Fig. 15] Fig. 15 is a sectional view, from a position similar to the case of Fig. 5, of a variable capacitance switch according to a modification of the present invention.

### Reference Numerals

1, 21, 31: variable capacitance switches (for example, variable capacitors)
2: substrate
3: transmission line (or fixed electrode)
4, 4': supporting portions
6, 6', 32: movable parts
6A, 6A', 32A: conductor facing surfaces
6B, 6B', 32B: back faces
6C, 6C', 9A, 32C, 34A: central portions
6D, 6D', 9B, 32D, 34B: peripheral portions
7, 7': support beams
8, 33: insulating films (or warp adjusting films)
9, 34: movable electrodes
10, 10', 12: stoppers
11: cover part (or another substrate)
13, 22: driving electrodes (or driving means)

### Best Mode for Carrying Out the Invention

Variable capacitance elements according to embodiments of the present invention are described below in detail with reference to the accompanying drawings.

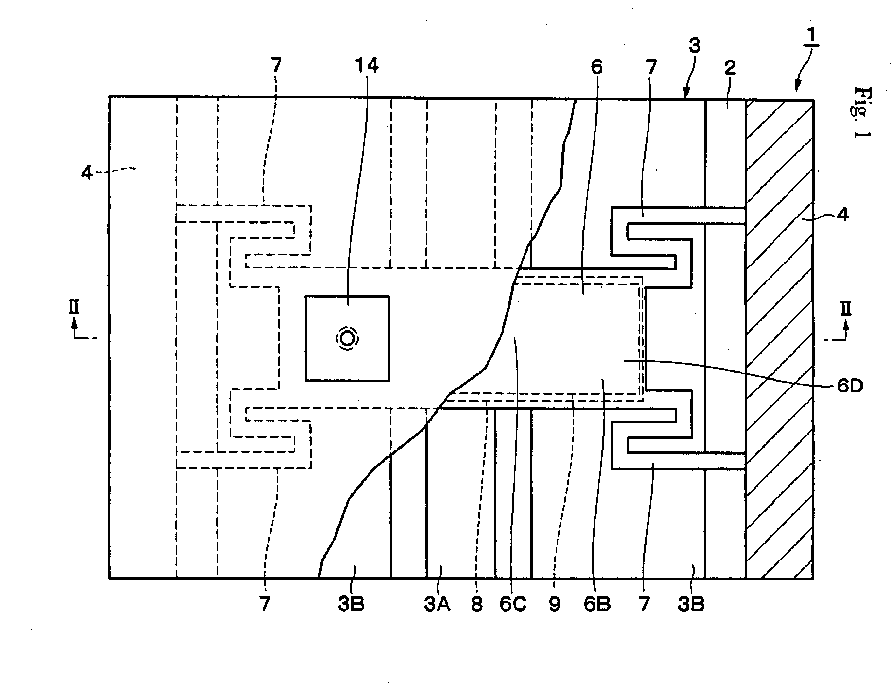

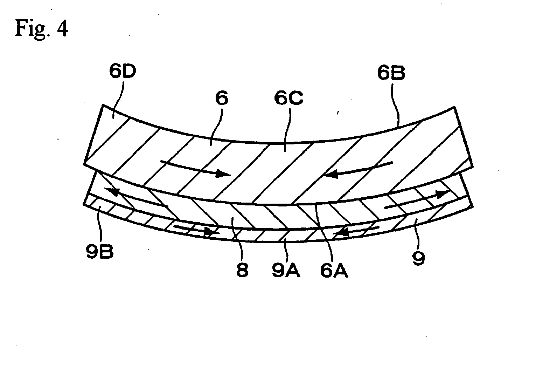

Figs. 1 to 12 show a first embodiment of the present invention. In this embodiment, a variable capacitance switch is described as an example of a variable capacitance element.

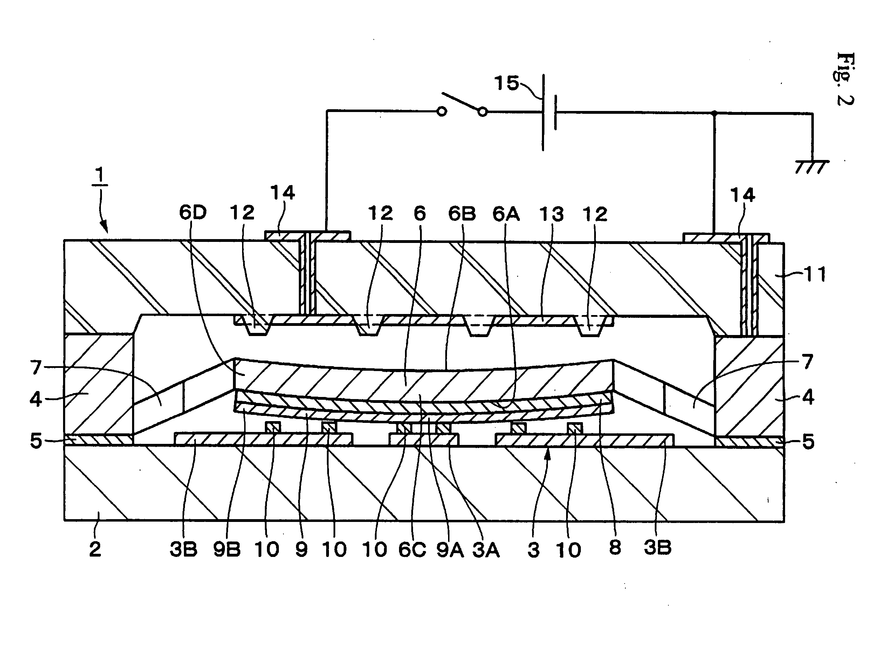

In the figures, reference numeral 1 denotes a variable capacitance switch, and reference numeral 2 denotes a substrate that forms a main part of the variable capacitance switch 1. As shown in Figs. 1 and 2, the substrate 2 is made of, for example, high resistive monocrystal silicon material, insulating glass material, or the like.

Reference numeral 3 denotes a transmission line which is provided as a fixed electrode on the substrate 2. The transmission line 3 is composed of, for example, a plurality of metal films, etc., and is formed as a coplanar line for transmitting high frequency signals such as microwaves and milliwaves. The transmission line 3 is constituted by a central conductor 3A which extends in the front and back directions in Fig. 1, and ground conductors 3B which are disposed to the left side and right side of the central conductor 3A, and which are connected to the ground.

Reference numeral 4 denotes, for example, two supporting portions which are provided on the substrate 2 in a protruding manner. To be more specific, the supporting portions are provided on both the right side and the left side of the transmission line 3 respectively. Each supporting portion 4 is made of, for example, low resistive monocrystal silicon material or the like, and is formed by means of an etching process, or the like, with a movable part 6 and support beams 7, which are described later. The supporting portion 4 is fixedly bonded to the substrate 2 by using, for example, an adhesive 5 such as polyimide resin.

Reference numeral 6 denotes a movable part which is disposed above the upper surface of the substrate 2 so as to be displaced. The movable part 6 is made of, for example, resistive monocrystal silicon material or the like, and is formed into an approximately quadrangle plate having, for example, a thickness of approximately 20 to 80 µm.

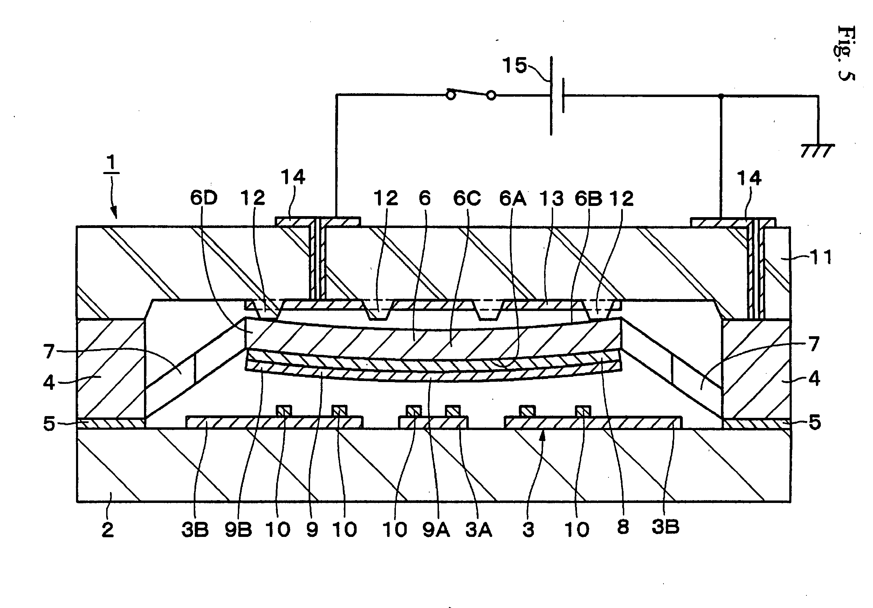

In addition, the movable part 6 is supported above the substrate 2 by the support beams 7, which is described later, and opposes a longitudinal intermediate region of the transmission line 3. The movable part 6 is displaced in a direction (a direction in which the movable part 6 is moved close to or away from the transmission line 3)perpendicular to the substrate 2. The movable part 6 is vertically moved between a signal cutoff position (see Fig. 2) at which a high frequency signal on the transmission line 3 is cut off or blocked by a movable electrode 9, which is described later, and a signal passage position (see Fig. 5) which allows the high frequency signal to pass through the longitudinal intermediate region of the transmission line 3.

A region of the movable part 6 which faces the conductors 3A and 3B of the transmission line 3 serves as a quadrangle conductor facing surface 6A. On the conductor facing surface 6A, an insulating film 8, which is described later, and the movable part 9 are stacked. A region of the movable part 6 which faces a cover part 11, which is described later, serves as a back face 6B.

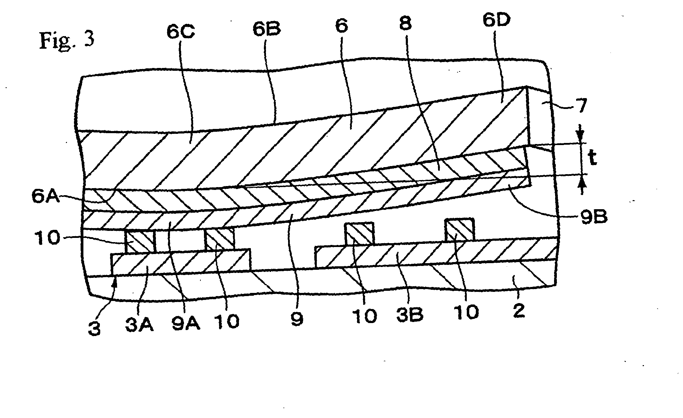

A compressive stress of an insulating film 8, which is described later, operates on the movable part 6, whereby the insulating film 8 is constantly maintained in a state of warping in a direction (a direction in which it is downwardly convex in Fig. 2) in which it is convex toward the transmission line 3. This causes a central portion 6C of the movable part 6 to protrude by the dimension t in Fig. 3 compared with a peripheral portion 6D around the central portion 6C.

Reference numeral 7 denotes, for example, four support beams which are each provided between each of four corners of the movable part 6 and each supporting portion 4. Each support beam 7 is made of, for example, low resistive monocrystal silicon material or the like, and is bent in a crank form, as shown in Figs. 1 and 2. Each support beam 7 warps to be deformed in an upward-downward direction in Fig. 2 perpendicular to the substrate 2, whereby the movable part 6 is supported so as to be displaced in the direction.

When the movable part 6 is at the signal cutoff position, the support beam 7 is maintained in a warping deformed (elastically deformed) state in a direction away from the transmission line 3. Its resilience (spring force) causes the movable part 6, etc., to apply a force to the transmission line 3. Therefore, when no power is supplied between a driving electrode 13, which is described later, and the movable part 6, the spring force of each support beam 7 maintains the movable electrode 9 to halt at a position (signal cutoff position) abutting against a stopper 10, which is described later.

Conversely, when power is supplied between the driving electrode 13 and the movable part 6, an electrostatic force is generated therebetween, as shown in Fig. 5. This displaces the movable part 6, the movable electrode 9, etc., in the direction away from the transmission line 3 against the spring force of each support beam 7. They are maintained to halt at a position (signal passage position) where the back face 6B of the movable part 6 abuts against a stopper 12, which is described later.

Reference numeral 8 denotes an insulating film which is provided as a warp adjusting film on the conductor facing surface 6A of the movable part 6. As shown in Figs. 2 to 4, the insulating film 8 is formed by an insulating thin film of, for example, silicon oxide (SiO₂) or the like. It covers approximately the entirety of the conductor facing surface 6A of the movable part 6, having a thickness of, for example, approximately 0.1 to 10 µm.

The insulating film 8 is disposed between the movable part 6 and the movable electrode 9, and provides insulation therebetween. In addition, by causing a compressive stress to operate on the movable part 6, the insulating film 8 adjusts the direction of a warp occurring in the entirety of the movable part 6, the insulating film 8, and the movable electrode 9. This constantly maintains all of them in a state in which they warp in a convex form toward the transmission line 3.

In this case, the movable part 6, the insulating film 8, and the movable electrode 9 are formed so that a contributing component of a thermal stress, generated by differences in thermal expansion among the movable part 6, the insulating film 8, and the movable electrode 9, is small for an internal stress generated when the insulating film 8 and the movable electrode 9 are formed on the movable part 6. A total stress of the internal stress and the thermal stress can be designed so as to constantly maintain the warping direction of the movable part 6 to be unidirectional for a change in temperature, etc.

This allows the variable capacitance switch 1 to stably maintain a state in which, for a change in temperature of, for example, approximately -50 to 150°C, the movable part 6, etc., warps in a downwardly convex form toward the transmission line 3. This can prevent the warping direction from changing.

Reference numeral 9 denotes a movable electrode provided to the conductor facing surface 6A with the insulating film 8 disposed therebetween. The movable electrode 9 is formed by a three-layer thin metal film obtained by stacking, for example, an adhesion layer of titanium, chromium, or the like, a barrier layer of platinum, palladium, or the like, and an electrode layer of gold or the like. The movable electrode 9 is formed having a thickness of, for example, approximately 0.1 to 5 µm, and is disposed in a position for covering the conductor facing surface 6A of the movable part 6.

The movable electrode 9 moves close to the intermediate portion of the transmission line 3 at the signal cutoff position and moves away from the transmission line 3 at the signal passage position, whereby the capacitance between the movable electrode 9 and the transmission line 3 is changed. This allows the resonant frequency of the transmission line 3 to change in accordance with the position of the movable electrode 9. A high frequency signal transmitted on the transmission line 3 is cut off at the position of the movable electrode 9 in accordance with the resonant frequency, or passes at this position. Thus, the movable electrode 9 can perform a switching operation.

In this case, the compressive stress of the insulating film 8 maintains the movable electrode 9 to warp in a convex form toward the transmission line 3, with the movable part 6. A central portion 9A of the movable electrode 9 more projects than peripheral portions 9B toward the transmission line 3.

Accordingly, even if ambient temperature or the like changes, when the movable part 6 is at the signal cutoff position, the central portion 9A, or the like, of the movable electrode 9 can be stably brought to halt at a position close the central conductor 3A of the transmission line 3. As a result, at the signal cutoff position, the capacitance between the movable electrode 9 and the transmission line 3, the resonant frequency of the transmission line 3, etc., can be accurately set, whereby the high frequency signal can be stably cut off.

Reference numeral 10 denotes insular stoppers provided at plural positions of the transmission line 3. Each stopper 10 is formed by etching an insulating film of, for example, silicon oxide, and is formed in a portion of the surface of the transmission line 3, as shown in Figs. 2 and 3. The stopper 10 upward projects from the surface of the transmission line 3 to the movable electrode 9. Its projecting end abuts on the movable electrode 9 at the signal cutoff position. This allows the stopper 10 to maintain the movable part 6, the movable electrode 9, etc., to which force is applied by each support beam 7, at a halt at the signal cutoff position. In this state, the stopper 10 establishes insulation between the transmission line 3 and the movable electrode 9.

Reference numeral 11 denotes the cover part, which is provided as another substrate to the substrate 2, with each supporting portion 4 provided therebetween. The cover part 11 is made of, for example, insulating glass material, high resistive silicon material, or the like. The cover part 11 is joined to one end of the supporting portion 4 by means of anode coupling, and is disposed opposite the substrate 2, with the movable part 6 provided therebetween.

Reference numerals 12 denotes insular stoppers integrally formed at plural points of the cover part 11 at positions opposing the back face 6B of the movable part 6. The stopper 12 projects at a position closer to the movable part 6 compared with a driving electrode 13, which is described later. Its projecting end abuts on the movable part 6 at the signal passage position. The stopper 12 maintains the movable part 6, the movable electrode 9, etc., which are pulled to the driving electrode 13, to be at a halt at the signal passage position. It establishes insulation between the movable part 6 and the driving electrode 13.

Reference numeral 13 denotes the driving electrode, which is provided as a driving means on the cover part 11 by using, for example, a metal film or the like. The driving electrode 13 is disposed between stoppers 12, and opposes the back face 6B of the movable part 6. The driving electrode 13 is connected to a power supply 15 through a lead electrode 14 provided on the cover part 11. The power supply 15 is connected to the movable part 6 through another lead electrodes 14, the supporting portions 4, the support beams 7, etc. When the power supply 15 supplies power between the driving electrode 13 and the movable part 6, an electrostatic force is generated therebetween, whereby the movable part 6, etc., can be displaced toward the signal passage position.

The variable capacitance switch 1 in this embodiment has the above-described configuration. Next, the case of using the variable capacitance switch 1 as a shunt switch is exemplified and its operation is described.

When the movable part 6 is at the signal cutoff position, by using the power supply 15 to supply power between the driving electrode 13 and the movable part 6, the movable part 6 is driven by an electrostatic force generated between them. The movable part 6, the movable electrode 9, etc., are displaced in a direction away from the transmission line 3. They halt at the signal passage position in a state pressed onto the stoppers 12.

This maintains the movable electrode 9 to be away from the transmission line 3, and the capacitance therebetween decreases. Thus, the impedances of opposing regions of both are sufficiently higher than the impedance (e.g., approximately 50 Ω) of the transmission line 3. Accordingly, the high frequency signal transmitted through the transmission line 3 can pass at the position of the movable electrode 9, so that the variable capacitance switch 1 becomes a closed (ON) state.

In addition, when power supply by the power supply 15 is stopped, the spring forces of the support beams 7 drive the movable part 6 to be close to the transmission line 3. This brings the movable electrode 9 to halt at the signal cutoff position in a state pressed on the stoppers 10, and the movable electrode 9 is maintained in a state close to the transmission line 3. As a result, the resonant frequency of the transmission line 3 in the vicinity of the movable electrode 9 is changed to a predetermined frequency determined by the capacitance between the movable electrode 9 and the transmission line 3, and the inductance of the movable electrode 9.

By presetting the value of the resonant frequency to be equal to, for example, the frequency of the high frequency signal transmitted through the transmission line 3, the impedance of the transmission line 3 becomes the minimum value in the vicinity of the movable electrode 9, and the high frequency signal transmitted through the transmission line 3 can be cut off (reflected) at the position of the movable electrode 9. This can switch the variable capacitance switch 1 to an open (OFF) state.

In this case, the compressive stress of the insulating film 8 causes the movable part 6, the insulating film 8, and the movable electrode 9 to warp in a convex form toward the transmission line 3. Accordingly, when the movable part 6 is switched to the signal cutoff position, the central portion 9A, etc., of the movable electrode 9 can be stably maintained at an accurate position close to the central conductor 3A of the transmission line 3.

Therefore, when the movable part 6 is at the signal cutoff position, the capacitance can be accurately changed so that the capacitance between the movable electrode 9 and the transmission line 3 is a predetermined value of capacitance. The resonant frequency of the transmission line 3 can be set with high accuracy in accordance with the value of the capacitance. As a result, the resonant frequency obtained when the movable part 6 is at the signal cutoff position and the frequency of the high frequency signal transmitted through the transmission line 3 can be set to be coincident with each other. This ensures that a signal cutoff operation can be performed.

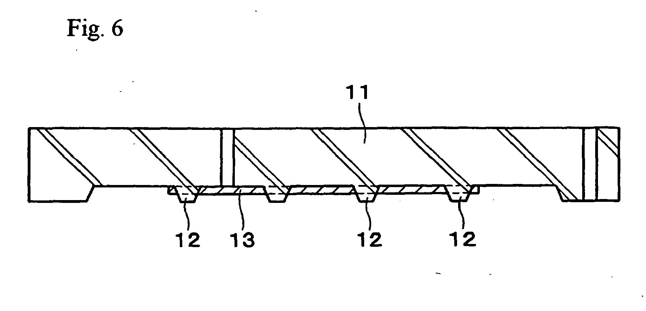

Next, a method for producing the variable capacitance switch 1 is described with reference to Figs. 6 to 12.

At first, in the cover-part forming step shown in Fig. 6, by processing, for example, an insulating glass plate, a high resistive silicon plate, or the like, the cover part 11, on which the stoppers 12, the driving electrode 13, etc., are provided, is formed.

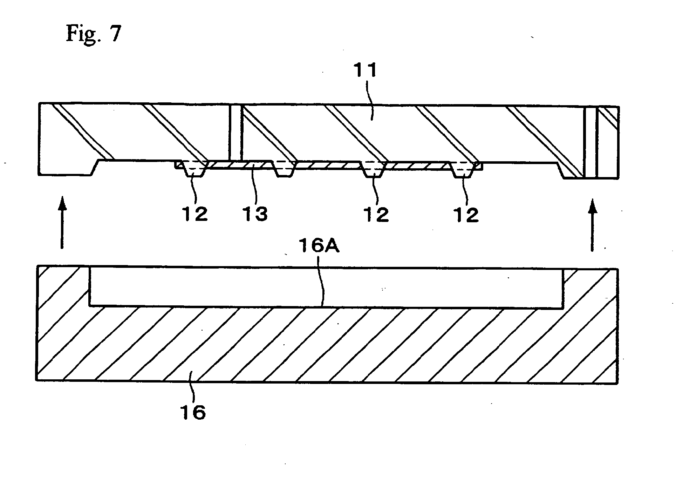

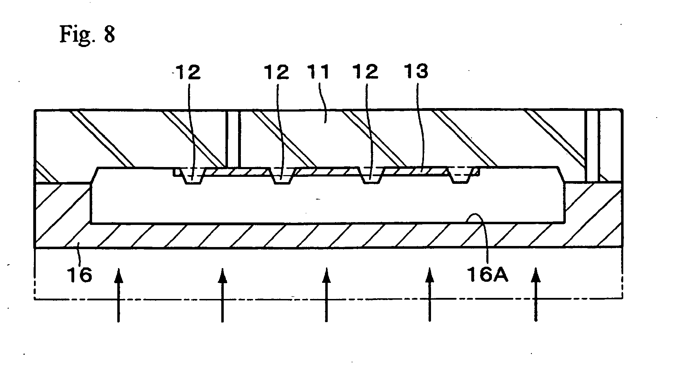

In addition, in the silicon-plate joining step shown in Fig. 7, in a monocrystal silicon plate (or the like) having a thickness of, for example, 100 µm or greater, a depression 16A having a predetermined depth is formed beforehand. The silicon plate 16 and the cover part 11 are joined to each other by a means such as anode coupling. Next, in the polishing step shown in Fig. 8, by polishing the silicon plate 16 from the opposite side of the cover part 11, the silicon plate 16 is formed to have a thickness of approximately 20 to 80 µm.

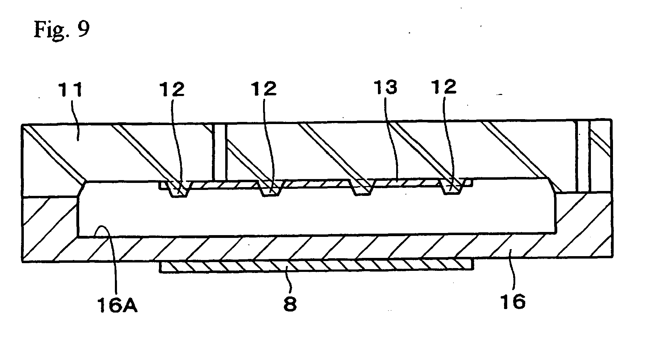

Next, in the insulating-film forming step shown in Fig. 9, by using, for example, a means such as sputtering or thermal oxidation, to form a silicon oxide film on the polished surface of the silicon plate 16, and etching the film into a predetermined shape, the insulating film 8 is formed.

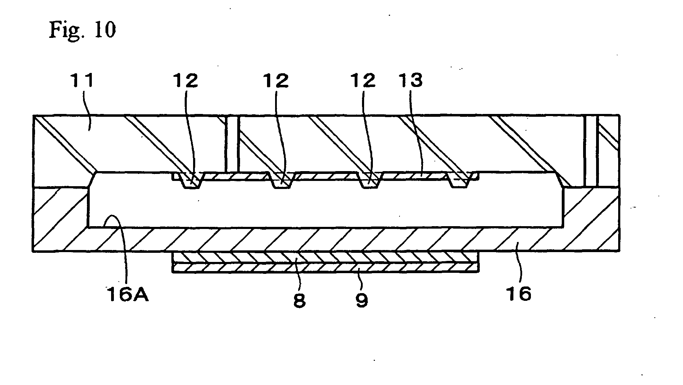

In the electrode forming step shown in Fig. 10, by using a means, such as deposition, to form a metal film including, for example, gold, platinum, palladium, titanium, chromium, or the like, on the surface of the insulating film 8, and etching the metal film into a predetermined shape, the movable electrode 9 is formed.

In this case, in the insulating-film forming step and the electrode forming step, by appropriately setting, for example, the thicknesses of the insulating film 8 and the movable electrode 9, and a formation range, etc., the compressive stress of the insulating film 8 cancels the tensile stress of the movable electrode 9, so that a total stress of the movable part 6, the insulating film 8, and the movable electrode 9 causes them to warp downwardly in a convex form.

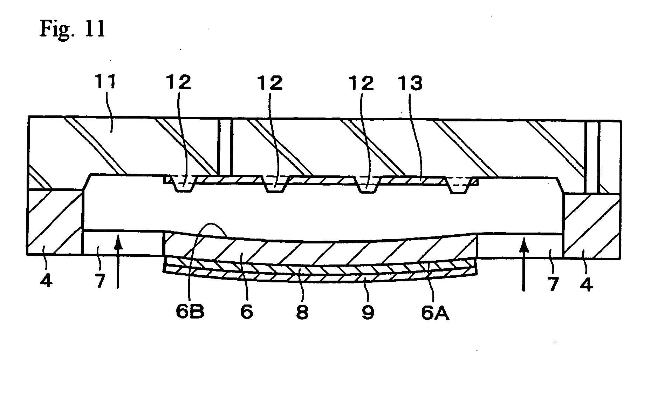

Next, in the movable part forming step shown in Fig. 11, by performing etching, such as reactive ion etching, on the silicon plate 16, the silicon plate 16 is patterned into a predetermined shape. Its portions are used to form the supporting portions 4, the movable part 6, and the support beams 7. Accordingly, the compressive stress of the insulating film 8 causes the patterned movable part 6 to warp downwardly in a convex form.

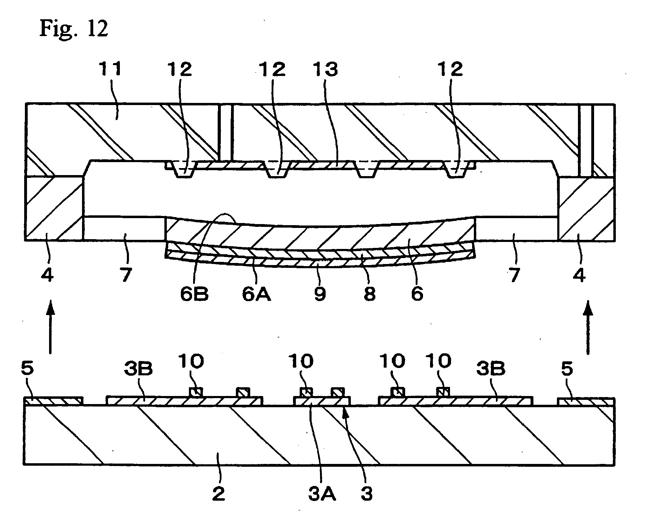

In the substrate bonding step shown in Fig. 12, by performing various types of film formation, etching, etc., on the surface of the substrate 2, the transmission line 3, the stopper 10, etc., are formed beforehand, and the substrate 2 is bonded to end faces of the supporting portions 4 by using the adhesive 5. In the above steps, at an appropriate stage, by forming the lead electrode 14, the variable capacitance switch 1 can be produced.

Therefore, according to this embodiment, the insulating film 8 is provided as a warp adjusting film on the conductor facing surface 6A of the movable part 6. Thus, the insulating film 8 can constantly warp the movable part 6 and the movable electrode 9 in a predetermined direction of warping in a downward convex form. When the movable part 6 is displaced to the vicinity of the transmission line 3, the movable electrode 9 can be stably maintained at a predetermined position close to the central conductor 3A, etc., of the transmission line 3.

Accordingly, for example, when the movable part 6 is moved close to the transmission line 3, with it inclined to some extent, the central portion 9A of the movable electrode 9 and the central conductor 3A of the transmission line 3, etc., can be moved close, having an accurate positional relationship. In addition, for example, even if ambient temperature considerably changes, the insulating film 8 can prevent the warping direction of the movable part 6 and the movable electrode 9 from being changed due to a difference in their thermal expansion, and can prevent the positional relationship between the movable electrode 9 and the transmission line 3 from being shifted with the change.

Therefore, a capacitance obtained when the movable electrode 9 and the transmission line 3 are moved close to each other can be set to an accurate value, and the capacitance between them can be switched with high accuracy in accordance with the position of the movable part 6. This makes it possible to perform a stable switching operation for the high frequency signal, and the operation characteristics can be preferably maintained for a change in temperature, etc. In addition, the performance and reliability required for the switch can be improved.

In this case, the movable part 6 and the insulating film 8 are formed so that a total stress of an internal stress and a thermal stress constantly maintains the warping direction of the movable part 6 to be constant for a change in temperature. Thus, it is ensured that, after the total stress, which is applied to the movable part 6 and the insulating film 8, etc., is changed by an increase or decrease in temperature, the warping direction can be prevented from being varied by this stress. This enables the movable part 6 and the movable electrode 9 to constantly warp in a stable state in a predetermined direction.

In addition, the insulating film 8 causes the movable part 6 and the movable electrode 9 to warp in a convex form toward the transmission line 3 by using a compressive stress. Thus, their central portions 6C and 9A can be set to project at a position close to the transmission line 3 compared with the peripheral portions 6D and 9B. Accordingly, when the movable part 6 is displaced toward the transmission line 3, the central portion 9A of the movable electrode 9 and the transmission line 3 are set to be closer to each other, so that the distance between both can be sufficiently decreased. Therefore, when the movable electrode 9 is moved close to or away from the transmission line 3, the capacitance between them can be greatly changed, whereby the switching operation can be stably performed in response to a change in capacitance.

Since the movable electrode 9 is provided to the movable part 6, with the insulating film 8 provided therebetween, the insulating film 8 establishes insulation between the movable part 6 and the movable electrode 9, while adjusting the warping direction of them. This eliminates the need to provide another insulating structure or the like between the movable part 6, which is supplied with power from the power supply 15, and the movable electrode 9. Their construction can be simplified.

Since the transmission line 3 is provided with the stoppers 10, when the movable part 6 is displaced toward the transmission line 3, the movable electrode 9 is allowed to abut on the stoppers 10. This enables the stoppers 10 to stably maintain the movable electrode 9 at the signal cutoff position close to the transmission line 3, and the positional relationship (capacitance) between them can be accurately set. In addition, the movable electrode 9 can be prevented from being accidentally displaced due to vibration, a shock, etc., so that a vibration resistant characteristic can be enhanced. It is ensured that the stoppers 10 establish insulation between the movable electrode 9 and the transmission line 3, thus preventing short-circuiting between them.

In this case, the stoppers 10 are formed to be insular, and they are locally disposed on the surface of the transmission line 3. Thus, when the movable electrode 9 reaches the signal cutoff position, an area in which the movable electrode 9 and each stopper 10 abut on each other can be reduced, whereby the variable capacitive switch 1 can be prevented from malfunctioning due to fixed bonding of both.

In addition, in positions other than the stoppers 10, gaps can be formed between the movable electrode 9 and the transmission line 3. For example, even if the movable electrode 9 or the transmission line 3 has, in the gap position, a projection due to a processing error or the like, the projection can be prevented from affecting the positional relationship (the size of the gap between both) between the movable electrode 9 and the transmission line 3. Accordingly, the stoppers 10 can absorb the processing error or the like concerning the movable electrode 9 and the transmission line 3, and the positional relationship between both can be stably set.

For the substrate 2, the cover part 11 is provided opposite the substrate 2, with the movable part 6 provided therebetween, and the cover part 11 is provided with the stoppers 12, which are insular. Thus, almost similarly to the case of the stoppers 10, the stoppers 12 stably maintain the movable electrode 9 at the signal passage position, which is away from the transmission line 3. In this state, it is ensured that insulation is established between the movable part 6 and the driving electrode 13, and the movable part 6 can be prevented from being fixedly bonded to the stoppers 12. Since, in this case, the stoppers 12 are integrally formed with the cover part 11, processing and formation thereof can be efficiently performed.

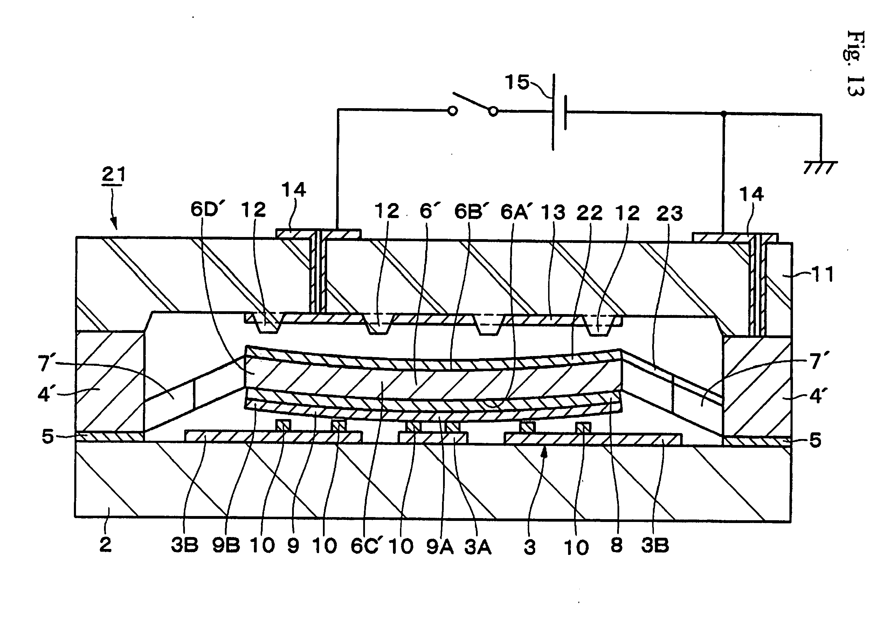

Next, Fig. 13 shows a second embodiment of the present invention. This embodiment is characterized in that a driving electrode is provided on also a movable part. In this embodiment, by using identical reference numerals to denote components identical to those in the first embodiment, their descriptions are omitted.

Reference numeral 21 denotes a variable capacitance switch. The variable capacitance switch 21 includes, almost similarly to the first embodiment, a substrate 2, a transmission line 3, supporting portions 4', a movable part 6', support beams 7', an insulating film 8, a movable electrode 9, and a driving electrode 13. The movable part 6' has a conductor facing surface 6A', a back face 6B', a central portion 6C', and peripheral portions 6D'.

However, for example, a metal film or the like is used to provide a movable side driving electrode 22 on the back face 6B' of the movable part 6'. The driving electrode 22 and a fixed side driving electrode 13 constitute a driving means. The driving electrode 22 is also connected to a lead electrode 14 through a wiring pattern 23 (partially shown) provided along the supporting portions 4' and the support beams 7'.

When the variable capacitance switch 21 is switched, by using a power supply 15 to supply power between the driving electrodes 13 and 22 to generate an electrostatic force between them, the movable part 6' can be displaced to the signal passage position.

Accordingly, also in this embodiment having the above configuration, an operation and advantages substantially similar to those in the first embodiment can be obtained. In particular, in this embodiment, the movable side driving electrode 22 is provided on the back face 6B' of the movable part 6. Thus, when the variable capacitance switch 21 is switched, by supplying power between the fixed side driving electrode 13 and the movable side driving electrode 22, the movable part 6', etc., can be smoothly displaced to the signal passage position.

This eliminates the need to provide conductivity to, for example, the supporting portions 4', the movable part 6', the support beams 7', etc., these members can be formed also by insulating materials, so that design freedom can be enhanced.

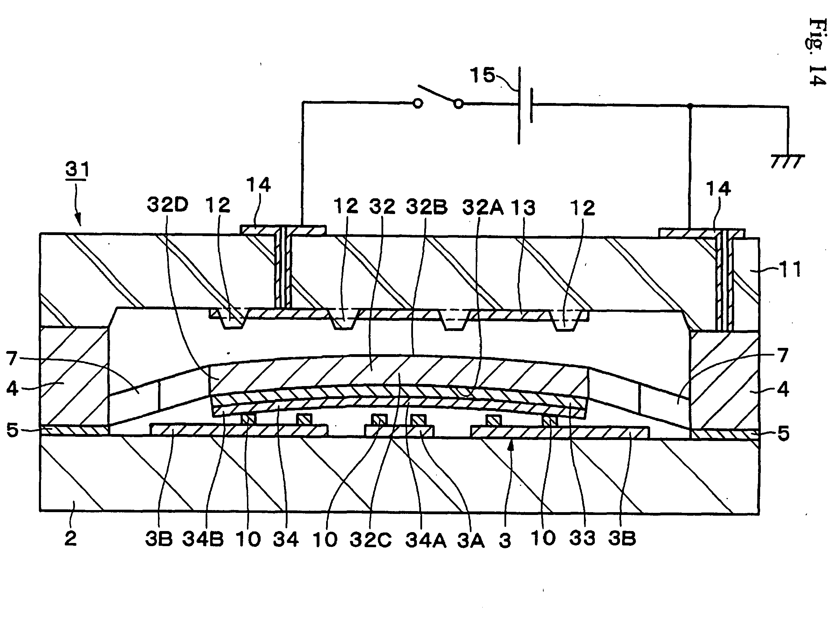

Next, Fig. 14 shows a third embodiment of the present invention. This embodiment is characterized in that a movable part is set to warp in a concave form away from a fixed electrode. In this embodiment, by using identical reference numerals to denote components identical to those in the first embodiment, their descriptions are omitted.

Reference numeral 31 denotes a variable capacitance switch. The variable capacitance switch 31 includes, almost similarly to the first embodiment, a substrate 2, a transmission line 3, support beams 7, a driving electrode 13, and a movable part 32, an insulating film 33, a movable electrode 34, etc., which are described later.

Reference numeral 32 denotes a movable part which is disposed on the surface of the substrate 2 so as to be displaced. The movable part 32 is made of, for example, monocrystal silicon material or the like, almost similarly to the first embodiment. The movable part 32 is formed into a substantially quadrangle plate having a conductor facing surface 32A, a back face 32B, a central portion 32C, and peripheral portions 32D, and is supported by the support beams 7 so as to be displaced perpendicularly with respect to the substrate 2.

The insulating film 33 and the movable electrode 34, which are almost similar to those in the first embodiment, are stacked on the conductor facing surface 32A of the movable part 32. However, both apply tensile stress to the movable part 32.

This constantly maintains the movable part 32 and the movable electrode 34 to warp in a direction (in a direction in which both are in an upward convex form in Fig. 14) in which they are in a concave form away from the transmission line 3. Their central portions 32C and 34A project upwardly compared with the peripheral portions 32D and 34B.

Therefore, also in this embodiment having the above configuration, an operation and advantages almost similar to those in the first embodiment can be obtained.

In the first and second embodiments, the insulating films 8 are provided on the conductor facing surfaces 6A and 6A' of the movable parts 6 and 6'. However, the present invention is not limited thereto. For example, it is possible that, by providing warp-adjusting films on the back faces 6B and 6B' of the movable parts 6 and 6', the movable parts be set to warp in a convex form toward the transmission line by the film's tensile stress.

In the embodiments, the insulating films 8 and 33 which are made of, for example, silicon oxide, are used as warp-adjusting films. However, the present invention is not limited thereto. For example, the warp-adjusting films may be made of other materials including silicon nitride (SiN). Moreover, when a warp-adjusting film is not used in the insulating structure between the movable part 6 and the movable electrode 9, the warp-adjusting film may be made of conductive material.

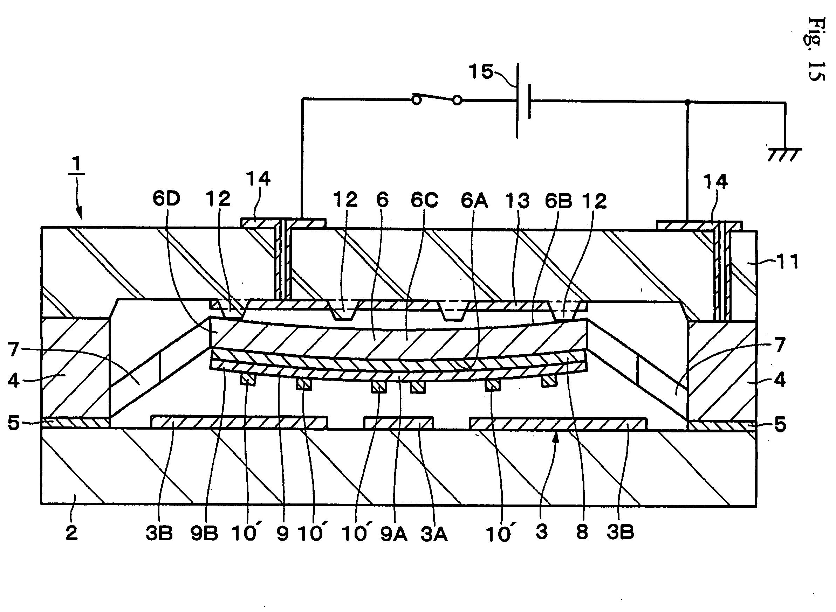

In the embodiments, the stoppers 10 are provided on the transmission line 3 in a protruding manner. However, the present invention is not limited thereto. For example, the present invention may be formed into the modification shown in Fig. 15. In this case, stoppers 10' are provided on the surface of the movable electrode 9 in a protruding manner instead of the stoppers 10 on the side of the transmission line 3. In addition, in the present invention, both stoppers 10 and 10' may be provided.

In the embodiments, by etching an insulating film of silicon oxide or the like, the stoppers 10, which are insular, are formed. However, the present invention is not limited thereto. For example, insulating material other than silicon oxide may be used. Alternatively, for example, an insulating film for covering the transmission line 3 may be formed and directly used without being etched.

In the embodiments, the driving electrode 13 is provided on the cover part 11. However, the present invention is not limited thereto. As shown in, for example, Japanese Unexamined Patent Application Publication No. 2000-188050, a driving electrode may be provided on a substrate and a cover part or the like may not be used. In this case, the driving electrode opposes a movable part at a position different from a fixed electrode, and an electrostatic force displaces the movable part.

In addition, in the embodiments, variable capacitance switches 1, 21, and 31 have been described as examples of variable capacitance elements. However, the present invention is not limited thereto. For example, the present invention may be applied to a variable capacitor in which the capacitance of a capacitor composed of a fixed electrode and a movable electrode is switched in accordance with the position of a movable part.

In the embodiments, a coplanar line is described as an example of the transmission line 3. However, the present invention is not limited thereto. For example, the present invention may be formed for application to various types of transmission lines including a slot line, etc.

## Claims

1. A variable capacitance element (1) comprising: a substrate (2); a fixed electrode provided on the substrate (2); a plate-like movable part (6) provided, at a position opposing the fixed electrode, on the substrate (2) so as to be displaced, the movable part (6) being moved close to and away from the fixed electrode; a movable electrode (9) provided in a region of the movable part (6) wich faces the fixed electrode, the movable electrode (9) having a capacitance in conjunction with the fixed electrode which is changed when the movable electrode (9) is moved close to or away from the fixed electrode; and driving means for driving the movable part in a direction in which the movable part (6) is moved close to or away from the fixed electrode,
**characterised in that** the movable part (6) is provided with a warp adjusting film (8) by which a direction in which a central portion (6C) of the movable part (6) warps with respect to peripheral portions thereof is constantly maintained to one of a direction of warping in a convex form toward the fixed electrode and a direction of warping in a concave form away

2. The variable capacitance element (1) according to Claim 1, wherein, when the sum of an internal stress generated in the formation of the warp adjusting film (8) on the movable part (6) and a thermal stress generated by a difference in thermal expansion between the movable part (6) and the warp adjusting film (8) is a total stress, the movable part (6) and the warp adjusting film (8) are formed so that, for a change in temperature, the total stress constantly maintains the warping direction of the movable part to be unidirectional.

3. The variable capacitance element (1) according to Claim 1 or 2, wherein the warp adjusting film (8) is formed to warp the movable part (6) in the direction of warping in the convex form toward the fixed electrode.

4. The variable capacitance element (1) according to Claim 1 or 2, wherein the warp adjusting film (8) is an insulating film for covering, with a compressive stress, the region of the movable part (6) which faces the fixed electrode, the movable electrode (9) is provided on the movable part (6), with the insulating film provided therebetween, and the insulating film uses the compressive stress to warp the movable part (6) and the movable electrode (9) in the direction of warping in the convex form toward the fixed electrode.

5. The variable capacitance element (1) according to Claim 1 or 2, wherein the warp adjusting film (8) is formed so as to warp the movable part (6) in the direction of warping in the concave form away from the fixed electrode.

6. The variable capacitance element according to Claim 1, 2, 3, 4, or 5, wherein, between the fixed electrode and the movable electrode (9), at least one member is provided with an insulating stopper (10) which abuts on the other member when the movable part (6) is displaced toward the fixed electrode.

7. The variable capacitance element (1) according to Claim 6, wherein the stopper (10) is provided in a portion of a region where the fixed electrode and the movable part (6) oppose each other.

8. The variable capacitance element (1) according to Claim 1, 2, 3, 4, 5, 6, or 7, wherein the fixed electrode is a transmission line (3) for transmitting a high frequency signal.

9. The variable capacitance element according to Claim 1, 2, 3, 4, 5, 6, 7, or 8, wherein, for said substrate (2), a different substrate is provided opposite said substrate, with the movable part (6) provided therebetween, and the different substrate is provided with a driving electrode (13) which forms the driving means and which uses an electrostatic force to displace the movable part.

## Patentansprüche

1. Ein Element mit variabler Kapazität (1), das folgende Merkmale aufweist:
ein Substrat (2); eine auf dem Substrat (2) bereitgestellte feste Elektrode; ein plattenartiges bewegliches Teil (6), das an einer Position gegenüber der festen Elektrode auf dem Substrat (2) versetzbar bereitgestellt ist, wobei das bewegliche Teil (6) in die Nähe der und weg von der festen Elektrode bewegt wird; eine bewegliche Elektrode (9), die in einer Region des beweglichen Teils (6) bereitgestellt ist, die der festen Elektrode zugewandt ist, wobei die bewegliche Elektrode (9) eine Kapazität in Verbindung mit der festen Elektrode aufweist, die verändert wird, wenn die bewegliche Elektrode (9) in die Nähe der oder weg von der festen Elektrode bewegt wird; und eine Antriebseinrichtung zum Antreiben des beweglichen Teils in einer Richtung, in der das bewegliche Teil (6) in die Nähe der oder weg von der festen Elektrode bewegt wird,
**dadurch gekennzeichnet, dass** das bewegliche Teil (6) mit einem Krümmungseinstellfilm (8) versehen ist, durch den eine Richtung, in der ein zentraler Abschnitt (6C) des beweglichen Teils (6) sich mit Bezug auf Randabschnitte desselben krümmt, konstant zu entweder einer Richtung der Krümmung in einer konvexen Form zu der festen Elektrode hin oder einer Richtung der Krümmung in einer konkaven Form von der festen Elektrode weg beibehalten wird.

2. Das Element mit variabler Kapazität (1) gemäß Anspruch 1, bei dem, wenn die Summe einer bei der Bildung des Krümmungseinstellfilms (8) auf dem beweglichen Teil (6) erzeugten inneren Spannung und einer durch eine Differenz der thermischen Ausdehnung zwischen dem beweglichen Teil (6) und dem Krümmungseinstellfilm (8) erzeugten thermischen Spannung eine Gesamtspannung ist, das bewegliche Teil (6) und der Krümmungseinstellfilm (8) so gebildet sind, dass für eine Veränderung der Temperatur die Gesamtspannung die Krümmungsrichtung des beweglichen Teils konstant unidirektional beibehält.

3. Das Element mit variabler Kapazität (1) gemäß Anspruch 1 oder 2, bei dem der Krümmungseinstellfilm (8) gebildet ist, um das bewegliche Teil (6) in der Richtung der Krümmung in der konvexen Form zu der festen Elektrode hin zu krümmen.

4. Das Element mit variabler Kapazität (1) gemäß Anspruch 1 oder 2, bei dem der Krümmungseinstellfilm (8) ein isolierender Film zum Bedecken der Region des beweglichen Teils (6), die der festen Elektrode zugewandt ist, mit einer Kompressionsspannung ist, die bewegliche Elektrode (9) auf dem beweglichen Teil (6) bereitgestellt ist, wobei der isolierende Film dazwischen bereitgestellt ist, und der isolierende Film die Kompressionsspannung verwendet, um das bewegliche Teil (6) und die bewegliche Elektrode (9) in der Richtung der Krümmung in der konvexen Form zu der festen Elektrode hin zu krümmen.

5. Das Element mit variabler Kapazität (1) gemäß Anspruch 1 oder 2, bei dem der Krümmungseinstellfilm (8) gebildet ist, um das bewegliche Teil (6) in der Richtung der Krümmung in der konkaven Form weg von der festen Elektrode zu krümmen.

6. Das Element mit variabler Kapazität gemäß Anspruch 1, 2, 3, 4 oder 5, bei dem zwischen der festen Elektrode und der beweglichen Elektrode (9) zumindest ein Bauglied mit einem isolierenden Anschlag (10) versehen ist, der an das andere Bauglied anstößt, wenn das bewegliche Teil (6) zu der festen Elektrode hin versetzt wird.

7. Das Element mit variabler Kapazität (1) gemäß Anspruch 6, bei dem der Anschlag (10) in einem Abschnitt einer Region bereitgestellt ist, wo die feste Elektrode und das bewegliche Teil (6) einander gegenüberliegen.

8. Das Element mit variabler Kapazität (1) gemäß Anspruch 1, 2, 3, 4, 5, 6 oder 7, bei dem die feste Elektrode eine Übertragungsleitung (3) zum Übertragen eines Hochfrequenzsignals ist.

9. Das Element mit variabler Kapazität gemäß Anspruch 1, 2, 3, 4, 5, 6, 7 oder 8, bei dem für das Substrat (2) ein anderes Substrat gegenüber dem Substrat bereitgestellt ist, wobei das bewegliche Teil (6) dazwischen bereitgestellt ist, und das andere Substrat mit einer Antriebselektrode (13) versehen ist, die die Antriebseinrichtung bildet und die eine elektrostatische Kraft verwendet, um das bewegliche Teil zu versetzen.

## Revendications

1. Elément à capacitance variable (1) comprenant : un substrat (2) ; une électrode fixe prévue sur le substrat (2) ; une partie mobile en forme de plaque (6) prévue, à une position face à l'électrode fixe, sur le substrat (2) de manière à être déplacée, la partie mobile (6) étant rapprochée et éloignée de l'électrode fixe ; une électrode mobile (9) prévue dans une région de la partie mobile (6) qui fait face à l'électrode fixe, l'électrode mobile (9) ayant une capacitance conjointement avec l'électrode fixe qui est modifiée lorsque l'électrode mobile (9) est rapprochée ou éloignée de l'électrode fixe ; et des moyens d'entraînement pour entraîner la partie mobile dans une direction dans laquelle la partie mobile (6) est rapprochée ou éloignée de l'électrode fixe,
**caractérisé en ce que** la partie mobile (6) est pourvue d'un film d'ajustement de voilement (8) par lequel une direction dans laquelle une partie centrale (6c) de la partie mobile (6) se voile par rapport aux parties périphériques de celle-ci est maintenue constamment dans l'une d'une direction de voilement en une forme convexe vers l'électrode fixe et d'une direction de voilement en une forme concave à l'opposé de l'électrode fixe.

2. Elément à capacitance variable (1) selon la revendication 1, dans lequel, lorsque la somme d'une contrainte interne générée lors de la formation du film d'ajustement de voilement (8) sur la partie mobile (6) et d'une contrainte thermique générée par une différence de dilatation thermique entre la partie mobile (6) et le film d'ajustement de voilement (8) est une contrainte totale, la partie mobile (6) et le film d'ajustement de voilement (8) sont formés de sorte que, pour une variation de la température, la contrainte totale maintienne constamment la direction de voilement de la partie mobile pour qu'elle soit unidirectionnelle.

3. Elément à capacitance variable (1) selon la revendication 1 ou 2, dans lequel le film d'ajustement de voilement (8) est formé pour voiler la partie mobile (6) dans la direction de voilement en la forme convexe vers l'électrode fixe.

4. Elément à capacitance variable (1) selon la revendication 1 ou 2, dans lequel le film d'ajustement de voilement (8) est un film d'isolement pour recouvrir, avec une contrainte de compression, la région de la partie mobile (6) qui fait face à l'électrode fixe, l'électrode mobile (9) est prévue sur la partie mobile (6), le film d'isolement étant prévu entre elles, et le film d'isolement utilise la contrainte de compression pour voiler la partie mobile (6) et l'électrode mobile (9) dans la direction de voilement en la forme convexe vers l'électrode fixe.

5. Elément à capacitance variable (1) selon la revendication 1 ou 2, dans lequel le film d'ajustement de voilement (8) est formé de manière à voiler la partie mobile (6) dans la direction de voilement en la forme concave à l'opposé de l'électrode fixe.

6. Elément à capacitance variable selon la revendication 1, 2, 3, 4 ou 5, dans lequel, entre l'électrode fixe et l'électrode mobile (9), au moins un élément est pourvu d'une butée d'isolement (10) qui vient en butée sur l'autre élément lorsque la partie mobile (6) est déplacée vers l'électrode fixe.

7. Elément à capacitance variable (1) selon la revendication 6, dans lequel la butée (10) est prévue dans une partie d'une région où l'électrode fixe et la partie mobile (6) sont l'une en face de l'autre.

8. Elément à capacitance variable (1) selon la revendication 1, 2, 3, 4, 5, 6 ou 7, dans lequel l'électrode fixe est une ligne de transmission (3) pour transmettre un signal haute fréquence.

9. Elément à capacitance variable selon la revendication 1, 2, 3, 4, 5, 6, 7 ou 8, dans lequel, pour ledit substrat (2), un substrat différent est prévu face audit substrat, la partie mobile (6) étant prévue entre eux, et le substrat différent est pourvu d'une électrode d'entraînement (13) qui forme les moyens d'entraînement et qui utilise une force électrostatique pour déplacer la partie mobile.
